# EUROPÄISCHE PATENTSCHRIFT

(11) **EP 1 102 921 B1**
(45) Veröffentlichungstag und Bekanntmachung des Hinweises auf die Patenterteilung: **05.06.2002**
(21) Anmeldenummer: 99934535.8
(22) Anmeldetag: 24.06.1999
(51) Int. Cl.: F01N 3/20, F02D 41/14, F01N 3/08

(54) **VERFAHREN ZUR TEMPERATUR- UND LAMBDAABHÄNGIGEN DE-SULFATIERUNG EINES NO x?-SPEICHERKATALYSATORS**
METHOD FOR DESULFURISING A NO x? ACCUMULATING CATALYST ON THE BASIS OF TEMPERATURE AND LAMBDA VALUE
PROCEDE DE DESULFATATION D'UN CATALYSEUR ACCUMULATEUR DE NO x? EN FONCTION DE LA TEMPERATURE ET DE LA VALEUR LAMBDA

(30) Priorität: 07.08.1998 DE 19835808; 24.10.1998 DE 19849082
(43) Veröffentlichungstag der Anmeldung: 30.05.2001
(73) Patentinhaber: Volkswagen Aktiengesellschaft, 38436 Wolfsburg (DE)
(72) Erfinder: POTT, Ekkehard, D-38518 Gifhorn (DE)
(86) Internationale Anmeldenummer: EP9904397
(87) Internationale Veröffentlichungsnummer: WO0008312

(56) Entgegenhaltungen:
- EP-A- 0 244 127
- WO-A-98/12423
- GB-A- 2 318 418
- GB-A- 2 324 052
- US-A- 5 724 808

## Beschreibung

Die vorliegende Erfindung betrifft ein Verfahren zur De-Sulfatierung eines einer Brennkraftmaschine nachgeschalteten NOₓ-Speichers oder NOₓ-Speicherkatalysators gemäß dem Oberbegriff des Anspruchs 1.

NOₓ-Speicherkatalysatoren dienen zur Speicherung von NOₓ bei magerbetriebenen Brennkraftmaschinen. Bei Verwendung von schwefelhaltigen Kraftstoffen werden an den katalytisch wirksamen Oberflächen jedoch stets auch stabile Sulfate gebildet, die zu einer schleichenden Vergiftung des Katalysators führen und dessen NOₓ-Einlagerungsfähigkeit allmählich verringern. Im Unterschied zu einer Bleivergiftung bei 3-Wege-Katalysatoren ist eine solche Sulfatvergiftung eines NOₓ-Speicherkatalysators jedoch vollständig oder zumindest überwiegend reversibel, sofern hinreichend hohe Katalysatortemperaturen von mehr als etwa 550 °C und ein hinreichend hohes Schadstoffangebot bei geringem Restsauerstoffgehalt vorliegen.

Bei NOₓ-Speicherkatalysatoren wird daher in der Praxis durch Einstellung einer geeigneten De-Sulfatierungstemperatur und Absenkung des Sauerstoffgehaltes, d. h. Verringerung des Lambda-Wertes, in periodischen Abständen eine Entschwefelung oder De-Sulfatierung durchgeführt. Der Lambda-Wert liegt hierbei üblicherweise unter 1,05 und vorzugsweise sogar unter 1, d. h. im fetten Betriebsbereich der Brennkraftmaschine, da eine De-Sulfatierung bei höheren Lambda-Werten mit einer zu geringeren Reaktionsgeschwindigkeit erfolgen würde, was mit unerwünscht hohen De-Sulfatierungszeiten verbunden wäre.

Bei einer De-Sulfatierung von NOₓ-Speicherkatalysatoren wird der eingelagerte Schwefel im wesentlichen in Form von SO₂ und H₂S freigesetzt, wobei in geringen Mengen auch noch weitere schwefelhaltige Moleküle gebildet werden. Mit fetterem Abgas, d. h. mit Absinken des Lambda-Wertes, nimmt die Entschwefelungsgeschwindigkeit zwar zu, es wird aber zunehmend weniger SO₂ und mehr H₂S erzeugt, dessen Bildung wegen der auftretenden Geruchsbelästigung unerwünscht ist. Zur Vermeidung einer solchen Geruchsbelästigung erfolgt die De-Sultatierung von NOₓ-Speicherkatalysatoren im Stand der Technik bei Lambda-Werten von mehr als etwa 0,98, da das H₂S dann nur noch in vernachlässigbar geringen Mengen gebildet wird. Dieser Vorteil ist allerdings mit nach wie vor noch recht langen De-Sulfalierungszeiten und damit wiederum mit einem entsprechend hohen Verbrauch verbunden.

Zur Verringerung der De-Sulfatierungszeit wird daher in der nicht vorveröffentlichen deutschen Patentanmeldung 198 27 195.6 bzw. WO99/66185, die ein von dem Anmelder bekanntes Verfahren zeigt, eine zyklische Absenkung des Lambda-Wertes auf weniger als 0,98 vorgeschlagen, die zeitlich jeweils so kurz bemessen ist, daß die unerwünschte Schwefelwasserstoffbildung weitgehend unterdrückt wird. Dieses Verfahren basiert auf der Erkenntnis, daß ein Teil des im Katalysator eingelagerten Schwefels bei einer Absenkung des Lambda-Wertes auf weniger als 0,98 zunächst beschleunigt in Form eines charakteristischen SO₂-Emissionspeaks freigesetzt wird, während die Schwefelwasserstoffbildung erst mit einer gewissen Zeitverzögerung einsetzt, insgesamt deutlich langsamer abläuft und sich über einen längeren Zeitraum erstreckt als die SO₂- Bildung. Durch rechtzeitige Erhöhung des Lambda-Wertes läßt sich somit die unerwünschte Schwefelwasserstoffbildung bei gleichzeitiger Beschleunigung der SO₂- Bildung weitgehend unterdrücken.

Als technologischer Hintergrund sind aus der GB-A-2318418 auch ein Verfahren und ein System zur Überwachung der Funktionsfähigkeit oder des Speicherwirkungsgrades eines im Abgaspfad einer mager betriebenen Brennkraftmaschine angeordneten NOₓ-Speichers anhand einer Veränderung der Abgaszusammensetzung bei NOₓ-Regenerationsvorgängen bekannt. Beim Absinken des Speicherwirkungsgrades unter einen vorbestimmten Minimalwert erfolgt eine Verkürzung der Magerbetriebszeit. Bei Unterschreitung einer vorbestimmten minimalen Magerbetriebszeit wird durch Anhebung der Abgastemperatur auf mehr als 550°C und Anfettung des Abgases efne De-Sulfatierung eingeleitet. Die Zeitdauer zwischen den De-Sulfatierungsvorgängen wird gemessen und mit einer vorbestimmten minimalen Zeitdauer verglichen, bei deren Unterschreitung eine entsprechende Anzeige und ein Übergang zur stöchiometrischen Betriebsweise erfolgt.

Die Aufgabe der vorliegenden Erfindung besteht In der Schaffung eines verbesserten De-Sulfatierungsverfahrens, das eine noch schnellere Regeneration eines mit Schwefel beladenen NOₓ-Speicherkatalysators bei gleichzeitiger Unterdrückung der unerwünschten Schwefelwasserstoffbildung ermöglicht. Das gesuchte Verfahren soll hierbei insbesondere durch eine möglichst schnelle Freisetzung der letzten 20 % des eingelagerten Schwefels gekennzeichnet sein, die üblicherweise nur mit einer relativ geringen Regenerationsgeschwindigkeit erfolgt, da nicht mehr die oberflächennahen Bereiche im Washcoat sondern die inneren Zonen gereinigt werden müssen.

Diese Aufgabe wird erfindungsgemäß dadurch gelöst, daß der Lambda-Wert vor Beginn der zyklischen Betriebsweise zunächst für eine bestimmte Zeitspanne auf einen konstanten Wert λ < 1 eingestellt wird, die in Abhängigkeit von der gewählten De-Sulfatierungstemperatur und dem eingestellten Lambda-Wert zeitlich so kurz bemessen ist, daß eine Emission von Schwefelwasserstoff im wesentlichen unterbleibt. Bevorzugte Zeitspannen liegen hierbei zwischen 5 und 50 s, wobei sich der Bereich von 5 - 20 s für die Praxis als besonders vorteilhaft erweist Der eingestellte Lambda-Wert liegt hierbei vorzugsweise zwischen etwa 0,95 und 1, insbesondere jedoch im Bereich von etwa 0,98. Bei diesen Verfahrensbedingungen werden zumindest etwa 50 % des eingelagerten Schwefels bei Unterdrückung der unerwünschten Schwefelwasserstoffemission in Form von Schwefeldioxid freigesetzt, so daß bei der anschließenden zyklischen Betriebsweise nur noch der verbleibende Rest freigesetzt werden muß, die damit entsprechend schneller verläuft.

Während der anschließenden zyklischen Betriebsweise läßt man den Lambda-Wert um einen mittleren Lambda-Wert schwingen, der ausgehend von dem zunächst eingestellten konstanten Lambda-Wert als Funktion der Zeit abgesenkt wird. Die Absenkung kann hierbei entweder durchgehend bis zum Ende des De-Sulfatierungsvorgangs erfolgen oder aber nur bis zu einem bestimmten Minimalwert, der anschließend bis zum Erreichen des gewünschten De-Sulfatierungsgrades beibehalten wird. Zudem kann die Absenkung auch erst nach einer gewissen Zeitverzögerung einsetzen. Die Absenkungsgeschwindigkeiten liegen vorzugsweise zwischen 0,01 und 0,2 pro Minute, wobei sich der Bereich von 0,03 - 0,07 pro Minute als besonders vorteilhaft erweist. Die Untergrenze für die Absenkung des mittleren Lambda-Wertes, liegt vorzugsweise zwischen 0,90 und 0,96, insbesondere jedoch zwischen 0,93 und 0,95.

Bei der zeitlichen Veränderung des Lamda-Wertes wird die Schwingungs- oder Wobbleamplitude vorzugsweise als Funktion der Zeit erhöht, Auch hierbei kann die Erhöhung wieder durchgehend bis zum Ende des De-Sulfatierungsvorgangs erfolgen oder aber nur bis zum Erreichen eines bestimmten Maximalwertes, der dann bis zur Beendigung des De-Sulfatierungsvorgangs beibehalten wird. Der Betrag der maximalen Schwingungsamplitude ist hierbei vorzugsweise kleiner als etwa 0,1.

Die Schwingungs- oder Wobblefrequenz liegt vorzugsweise zwischen 0,05 und 0,5 Hz, wobei sich der Bereich um 0,1 - 0,2 Hz als besonders günstig erweist. Die anfänglich gewählte Frequenz wird wahrend des De-Sulfatierungsvorgangs vorzugsweise mit 0,05 - 0,5 Hz pro Minute verringert, wobei bevorzugt Werte zwischen 0,05 und 0,2 Hz verwendet werden. Die Verringerung der Frequenz kann entweder durchgehend bis zum Ende des De-Sulfatierungsvorgangs erfolgen oder aber nur bis zum Erreichen eines vorgegebenen
Minimalwertes, der dann für die Dauer des De-Sulfatierungsvorgangs beibehalten wird. Zudem kann auch die Frequenzänderung zunächst mit einer gewissen zeitlichen Verzögerung ersetzen.

Die angegebenen Verfahrensparameter bei der zyklischen Betriebsweise werden vorzugsweise so gewählt, daß nach 5 - 50 s ein Mindest-Zeitanteil im Mageren von 5 - 50 %, insbesondere jedoch von 10 - 20 %, erreicht ist. Als besonders günstig erweist es sich hierbei, wenn dieser Mindest-Zeitanteil im Mageren bereits nach 10 - 20 s erreicht ist.

Da die Schwefelwasserstoffbildung bei niedrigen De-Sulfatierungstemperaturen nur relativ träge erfolgt, werden zu Beginn eines De-Sulfatierungsvorgangs vorzugsweise relativ niedrige mittlere Katalysatortemperaturen oder De-Sulfatierungstemperaturen zwischen 580 °C und 620 °C eingestellt, wobei sich ein Wert von etwa 600 °C als besonders günstig erweist. Zur Steigerung der Reaktionsgeschwindigkeit und zur Beschleunigung des Regenerationsvorgangs wird die mittlere Katalysatortemperatur während des De-Sulfatierungsvorgangs dann vorzugsweise als Funktion der Zeit erhöht, wobei die erreichten Endtemperaturen vorzugsweise im Bereich zwischen etwa 680 °C und etwa 760 °C, insbesondere jedoch zwischen etwa 700 °C und 720 °C liegen. Ein besonders günstiges De-Sulfatierungsverhalten ergibt sich bei einer Endtemperatur von etwa 700 °C. Die Änderungsgeschwindigkeit der Temperatur beträgt hierbei vorzugsweise etwa 20 - 200 °C pro Minute, insbesondere jedoch 50 - 100 °C pro Minute, wobei die Änderung auch so erfolgen kann, daß die mittlere Katalysatortemperatur zu Beginn und/oder am Ende eines De-Sulfatierungsvorgangs jeweils für eine bestimmte Zeitspanne konstant gehalten wird. Der optimale Temperaturverlauf und die zugehörige Einstellung der übrigen Verfahrensparameter ist hierbei abhängig vom Speichermaterial und vom Washcoat, der Trägersubstanz, dem Katalysatorvolumen und der Katalysatorlage, der gespeicherten Schwefelmasse oder der Schwefelbeladung zu Beginn der De-Sulfatierung, der O₂-Speicherfähigkeit und dem Schadstoff-Sauerstoff-Verhältnis.

Die zeitliche Veränderung der Katalysatortemperatur, der Schwingungsamplitude, der Schwingungsfrequenz und des zugehörigen mittleren Lambda-Wertes kann hierbei linear, degressiv, progressiv oder in freier Form erfolgen, wozu beispielsweise auch gewisse Unstetigkeiten gehören können. Da eine gegenseitige Abhängigkeit dieser Veränderungen prinzipiell nicht erforderlich ist, können sie sowohl mit einer gewissen zeitlichen Abhängigkeit voneinander als auch zeitlich voneinander entkoppelt erfolgen. Die angegebenen Verfahrensparameter werden aber stets so gewählt, daß der eingelagerte Schwefel im wesentlichen in Form von SO₂ freigesetzt und die Bildung von Schwefelwasserstoff oder sonstiger Nebenprodukte weitgehend unterdrückt wird.

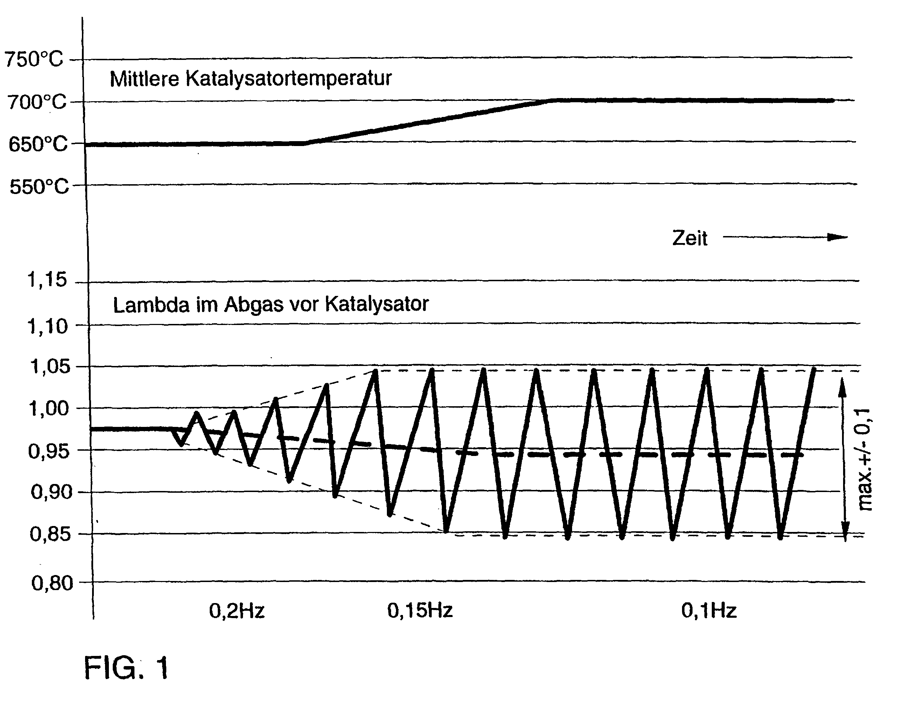

Weitere Merkmale und Vorteile der vorliegenden Erfindung ergeben sich nicht nur aus den zugehörigen Ansprüchen - für sich und/oder in Kombination - sondern auch aus der nachfolgenden ausführlichen Beschreibung eines in der zugehörigen Fig. 1 dargestellten speziellen Ausführungsbeispiels.
- Fig. 1: zeigt für einen erfindungsgemäßen De-Sulfatierungsvorgang den Verlauf der mittleren Katalysatortemperatur und des Lambda-Wertes als Funktion der Zeit.

Bei dem dargestellten Ausführungsbeispiel wird der Lambda-Wert aus dem mageren Betriebsbereich zunächst für etwa 12,5 s auf einen konstanten Wert von 0,98 abgesenkt. Gleichzeitig wird die mittlere Katalysatortemperatur auf einen relativ niedrigen Wert von 600 °C eingestellt, so daß zunächst ein bestimmter Bruchteil des eingelagerten Schwefels in Form von Schwefeldioxid emittiert wird, während die unerwünschte Schwefelwasserstoffbildung und die Bildung sonstiger Nebenprodukte weitgehend unterdrückt wird.

Anschließend läßt man den Lambda-Wert periodisch um einen mittleren Lambda-Wert schwingen, der ausgehend von dem zunächst eingestellten Lambda-Wert von 0,98 mit zunehmender De-Sulfatierungsdauer allmählich auf einen Wert von 0,94 abgesenkt wird, wobei die Absenkungsgeschwindigkeit etwa 0,035 pro Minute beträgt. Der genannte Lambda-Wert wird nach etwa 80 s erreicht und dann bis zum Ende des De-Sulfatierungsvorgangs, d. h. bis zum Erreichen eines gewünschten Regenerationsgrades beibehalten.

Die Schwingungs- oder Wobbleamplitude wird während der zyklischen Betriebsweise allmählich bis zu einem Maximalwert von ± 0,1 erhöht, der nach etwa 70 s erreicht ist und bis zum Ende des De-Sulfatierungsvorgangs beibehalten wird. Gleichzeitig wird die Schwingungs- oder Wobblefrequenz von anfänglich 0,2 Hz allmählich auf einen Endwert von 0,1 Hz verringert, der etwa gleichzeitig mit dem Erreichen des minimalen mittleren Lambda-Wertes erreicht wird.

Zusätzlich hierzu wird zur Erhöhung der Regenerationsgeschwindigkeit die mittlere Katalysatortemperatur nach etwa 38 s mit einer Geschwindigkeit von etwa 110°C/min linear bis zum Erreichen eines Endwertes von etwa 700 °C erhöht und dann für den Rest des De-Sulfatierungsvorgangs konstant gehalten.

Bei dieser Wahl der Verfahrensparameter wird der im Katalysator eingelagerte Schwefel nahezu vollständig in Form von Schwefeldioxid freigesetzt, während die unerwünschte Schwefelwasserstoffbildung und die Bildung sonstiger Nebenprodukte weitgehend unterdrückt wird. Aufgrund der starken Beschleunigung der De-Sulfatierungsgeschwindigkeit mit absinkendem Lambda-Wert und steigender mittlerer Katalysatortemperatur ermöglicht das erfindungsgemäße Verfahren im Vergleich zu herkömmlichen Verfahren hierbei zudem auch wesentlich kürzere De-Sulfatierungszeiten bis zum Erreichen eines gewünschten Entschwefelungsgrades, d. h. einer gewünschten katalytischen Aktivität, was wiederum mit einer entsprechenden Verbrauchsminderung verbunden ist. Im Vergleich zu einer De-Sulfatierung mit Beibehaltung der Anfangswerte für Lambda und die Temperatur lassen sich durch das erfindungsgemäße Verfahren um 10 - 50 % kürzere De-Sulfatierungszeiten erreichen.

Wie bereits erwähnt wurde, richten sich die zur De-Sulfatierung eines vorgegebenen vergifteten NOₓ-Speicherkatalysators verwendeten Verfahrensparameter nach den jeweils verwendeten Edelmetall- und Speichersubstanzen, der 02-Speicherfähigkeit des Washcoats, dem Katalysatorvolumen, der Raumgeschwindigkeit, der Abgaszusammensetzung im Fetten und Mageren und der mittleren Speicherkattemperatur, so daß die in dem Ausführungsbeispiel angegebenen Parameterwerte zur Erreichung eines optimalen Verfahrensablaufs in Abhängigkeit von dem jeweils verwendeten Katalysatorsystem innerhalb bestimmter Grenzen entsprechend angepaßt werden müssen. Entsprechende Parameterbereiche und bevorzugte zeitliche Abhängigkeiten der gewählten Werte sind beispielsweise den zugehörigen Unteransprüchen zu entnehmen.

## Patentansprüche

1. Verfahren zur De-Sulfatierung eines einer mager betriebenen Brennkraftmaschine nachgeschalteten NOₓ-Speicherkatalysators durch Einstellung einer vorbestimmten De-Sulfatierungstemperatur und intermittierende fett-mager-Betriebsweise, die einen Betrieb mit einem konstanten Lambda-Wert < 1 für eine bestimmte Zeitspanne umfaßt, die zeitlich so kurz bemessen ist, daß eine Emission von Schwefelwasserstoff im wesentlichen unterbleibt, und einen anschließenden zyklischen Betrieb, bei dem der Lambda-Wert um einen mittleren Wert schwingt, der ausgehend von dem zunächst eingestellten konstanten Lambda-Wert als Funktion der Zelt abgesenkt wird, wobei der Lambda-Wert durch die Schwingungen zyklisch für jeweils so kurze Zeit auf weniger als 0,98 abgesenkt wird, daß eine Emission von Schwefelwasserstoff im wesentlichen unterbleibt.

2. Verfahren nach Anspruch 1, **dadurch gekennzeichnet, daß** die Zeitspanne 5 - 50 s beträgt.

3. Verfahren nach Anspruch 2, **dadurch gekennzeichnet, daß** die Zeitspanne 5 - 20 s beträgt.

4. Verfahren nach einem der vorhergehenden Ansprüche, **dadurch gekennzeichnet, daß** der zunächst eingestellte konstante Lambda-Wert zwischen 0,95 und 1 liegt.

5. Verfahren nach einem der vorhergehenden Ansprüche, **dadurch gekennzeichnet, daß** der zunächst eingestellte konstante Lambda-Wert 0,98 beträgt.

6. Verfahren nach einem der vorhergehenden Ansprüche, **dadurch gekennzeichnet, daß** die Absenkung des mittleren Lambda-Wertes erst nach einer bestimmten Zeitverzögerung erfolgt.

7. Verfahren nach Anspruch 6, **dadurch gekennzeichnet, daß** der mittlere Wert auf einen Wert zwischen 0,90 und 0,96 abgesenkt wird.

## Claims

1. Method for desulphatizing an NOₓ storage catalyst, arranged downstream of an internal combustion engine operated on a lean mixture, by setting a predetermined desulphatization temperature and intermittent operation on a rich mixture and a lean mixture comprising operation with a constant lambda value < 1 for a certain period of time, which is made so short that emission of hydrogen sulphide essentially does not occur, and subsequent cyclic operation, during which the lambda value oscillates around an average value, which is lowered as a function of time, starting from the initially set constant lambda value, the lambda value in each case being lowered cyclically for such a short time to less than 0.98 by the oscillations that emission of hydrogen sulphide essentially does not occur.

2. Method according to Claim 1, **characterized in that** the period of time is 5 - 50 s.

3. Method according to Claim 2, **characterized in that** the period of time is 5 - 20 s.

4. Method according to one of the preceding claims, **characterized in that** the initially set constant lambda value is between 0.95 and 1.

5. Method according to one of the preceding claims, **characterized in that** the initially set constant lambda value is 0.98.

6. Method according to one of the preceding claims, **characterized in that** the average lambda value is lowered only after a certain delay.

7. Method according to Claim 6, **characterized in that** the average value is lowered to a value of between 0.90 and 0.96.

## Revendications

1. Procédé de dé-sulfatation d'un catalyseur à accumulation NOₓ, intercalé à la suite d'une machine à combustion interne, fonctionnant en régime maigre, par réglage d'une température prédéterminée de dé-sulfatation et d'une manière de fonctionnement intermittente en régime maigre-riche, qui comprend un fonctionnement à une valeur lambda constante < 1 pour un intervalle de temps déterminé, qui est à dimensionner dans le temps d'une façon si brève qu'une émission d'hydrogène sulfuré n'a, pour l'essentiel, pas lieu, et un fonctionnement cyclique subséquent, pour lequel la valeur lambda oscille autour d'une valeur moyenne, qui est abaissée, en fonction du temps, en partant de la valeur lambda constante, tout d'abord réglée, la valeur lambda étant abaissée de manière cyclique par les oscillations pendant à chaque fois un intervalle de temps si bref à une valeur de moins de 0,98, qu'une émission d'hydrogène sulfuré n'a, pour l'essentiel, pas lieu.

2. Procédé selon la revendication 1, **caractérisé en ce que** l'intervalle de temps est de 5 - 50 secondes.

3. Procédé selon la revendication 2, **caractérisé en ce que** l'intervalle de temps est de 5 - 20 secondes.

4. Procédé selon l'une quelconque des revendications précédentes, **caractérisé en ce que** la valeur lambda constante tout d'abord réglée se situe entre 0,95 et 1.

5. Procédé selon l'une quelconque des revendications précédentes, **caractérisé en ce que** la valeur lambda constante tout d'abord réglée est de 0,98.

6. Procédé selon l'une quelconque des revendications précédentes, **caractérisé en ce que** l'abaissement de la valeur lambda moyenne ne se fait qu'après un retard temporel déterminé.

7. Procédé selon la revendication 6, **caractérisé en ce que** la valeur moyenne est abaissée à une valeur comprise entre 0,90 et 0,96.
